# FASCICULE DE BREVET EUROPEEN

(11) **EP 2 477 508 B1**
(45) Date de publication et mention de la délivrance du brevet: **31.07.2013**
(21) Numéro de dépôt: 10768516.6
(22) Date de dépôt: 14.09.2010
(51) Int. Cl.: A23L 1/08

(54) **PROCEDE DE TRAITEMENT DU MIEL POUR OBTENIR UN MIEL LIQUIDE ET LIMPIDE**
VERFAHREN ZUR BEHANDLUNG VON HONIG, UM EINEN FLÜSSIGEN UND KLAREN HONIG ZU ERHALTEN
METHOD FOR TREATING HONEY TO OBTAIN LIQUID, CLEAR HONEY

(30) Priorité: 14.09.2009 EP 09290700
(43) Date de publication de la demande: 25.07.2012
(73) Titulaire: Apinov, 17000 La Rochelle (FR)
(72) Inventeur: POIROT, Benjamin, F-85450 Champagne Les Marais (FR)
(74) Mandataire: Marcadé, Véronique
(86) Numéro de dépôt international: PCT/FR2010/000620
(87) Numéro de publication internationale: WO 2011/030020

(56) Documents cités:
- CN-A- 1 709 159
- US-A- 5 468 513
- US-A1- 2005 266 135

## Description

La présente invention concerne un procédé de traitement du miel au moins partiellement cristallisé, en vue d'obtenir un miel qui puisse être stocké plusieurs mois à température ambiante en restant liquide et transparent. Le procédé est basé sur la séparation et l'extraction d'au moins une partie des cristaux de glucose présents dans le miel.

Le miel est composé :
- de sucres, qui représentent environ 80 % du miel: les sucres les plus représentés sont le glucose et le fructose, mais le miel comporte également du maltose, du saccharose, des trisaccharides et des sucres supérieurs
- d'eau (17 à 20%)
- de substances diverses (3 % environ) dont des acides organiques et aminés, des sels minéraux, des matières volatiles qui donnent au miel son arôme, des pigments qui lui donnent sa couleur, des vitamines : B1, B2, PP..., des enzymes *etc.*

Le mot "miel" désigne généralement le miel de nectar (ou miel de fleurs), produit par les abeilles pour se nourrir. Les abeilles utilisent également une autre source d'approvisionnement complémentaire, ou de remplacement : le miellat (*honeydew* en anglais). Le miellat est un liquide incolore gluant et sucré. C'est le produit final de la digestion de la sève de l'arbre par des pucerons qui se trouvent sur des résineux tels que pins, sapins, épicéa et mélèze ou sur des feuillus tels que chêne, tilleul, châtaignier, peuplier, saule, érable .... Ce miellat, visqueux ou cristallisé, est ensuite léché par les butineuses sur les feuilles. Les miels de miellat ont tous une couleur sombre rougeâtre. Dans le présent texte, le mot "miel" est utilisé pour désigner tant le miel de nectar que le miel de miellat.

Au moment de la récolte, tous les miels sont liquides. En fonction de leur teneur en glucose, ils durcissent et cristallisent plus ou moins rapidement. Leur provenance, et notamment les fleurs butinées par les abeilles, leur donnent leurs caractéristiques.

Le processus de cristallisation est inéluctable et dû à la sursaturation du miel en sucre. Les premiers cristaux de sucre formés sont composés de glucose parce qu'il s'agit du sucre le moins soluble présent dans le miel.

Le miel se commercialise à 70% sous forme liquide, alors que presque tous les miels cristallisent rapidement. Le miel d'acacia fait exception puisqu'il cristallise en moyenne après 12 mois de stockage à température ambiante. Cette différence de vitesse de cristallisation est due à la composition de ce miel qui présente une concentration en fructose majoritaire par rapport aux autres sucres et notamment par rapport au glucose.

La concentration en sucre (principalement le glucose) influence donc la vitesse de cristallisation du miel. Un coefficient permet de connaître la tendance à cristalliser d'un miel. Ce coefficient est le rapport entre la concentration de fructose et la concentration de glucose (F/G). Si ce ratio est proche de 1, la vitesse de cristallisation sera rapide (exemple : le miel de colza). Si ce rapport est compris entre 1,4 et 1,8 le miel restera liquide et transparent durant un minimum de 12 mois à température ambiante (comme un miel d'acacia).

Un autre paramètre est utilisé pour prédire la vitesse de cristallisation d'un miel : il s'agit du rapport entre la concentration en glucose et la quantité d'eau dans le miel (D/W). Lorsque ce rapport est inférieur à 2,2, le miel reste liquide durablement.

Les inventeurs ont par ailleurs mis en évidence un troisième paramètre permettant de prédire la vitesse de cristallisation du miel, puisqu'ils ont observé qu'un miel comportant moins de 30% de glucose (en masse) aura également tendance à rester liquide et transparent pendant plusieurs mois.

Les inventeurs ont observé que suivant les cas, la mesure d'un seul des paramètres mentionnés ci-dessus suffit pour connaître exactement la propension d'un miel à cristalliser, alors que dans d'autres cas, il est nécessaire d'en combiner deux, voire les trois. Par exemple, lorsque le procédé est réalisé toujours avec le même miel, l'homme du métier pourra déterminer que pour ce miel particulier, il suffit d'avoir un ratio F/G supérieur à une valeur donnée (déterminée expérimentalement) pour être sûr qu'il reste limpide pendant plusieurs mois de stockage. Ainsi, les inventeurs ont observé que pour le miel de tournesol, une valeur F/G > 1,4 permet d'assurer un stockage d'un an sans cristallisation. Pour un ratio compris entre 1,1 et 1,4, le même miel restera limpide moins longtemps, et sa durée avant cristallisation variera en fonction des autres paramètres (D/W et pourcentage total de glucose). Pour des miels plus complexes, par exemples pour des miellats contenant davantage de fibres alimentaires, il pourra être nécessaire, au moins dans un premier temps, de contrôler les trois paramètres pour assurer la bonne conservation du miel sous forme limpide après traitement selon l'invention.

Actuellement, deux techniques sont utilisées pour rendre le miel plus liquide :
- La première est de chauffer le miel afin de lui rendre un aspect liquide. Cette liquéfaction est obtenue par dissolution des cristaux de glucose. Ce procédé n'évite pas une recristallisation secondaire. L'augmentation de la température induit aussi une dénaturation par un vieillissement prématuré du produit. Ce vieillissement est quantifiable par la mesure de la concentration en Hydroxyméthylfurfural (HMF). L'HMF est un produit de dégradation des sucres. La limite maximale autorisée dans le miel est de 40 mg/Kg.
- La seconde technique est le brassage du miel de différentes façons (*cf.* brevet FR 732 192 B1). Ce brassage brise mécaniquement les cristaux formés afin d'obtenir une pâte plus facilement malléable, mais l'aspect transparent n'est pas obtenu.

D'autres techniques de liquéfaction du miel ont été décrites. Elles s'appuient principalement sur les deux techniques décrites précédemment.

Le brevet GB 2435391A présente une technique complexe en plusieurs étapes. Le miel est d'abord chauffé à 90°C afin de le rendre liquide et de le pasteuriser. Ensuite le miel est filtré à 5 µm afin d'enlever toutes les particules solides (exemple: grains de pollen) pouvant intervenir dans la cristallisation secondaire. Cette technique dénature doublement le miel : d'une part par le chauffage du produit qui induit une détérioration des enzymes et d'autre part par une micro filtration qui supprime la carte pollinique du miel.

Le brevet JP 2607604 a pour principe de filtrer (à 0,1-0.3 µm) le miel chaud (≥ 50°C) afin d'obtenir un miel liquide sans turbidité, mais préservant partiellement la teneur en sucre et les arômes.

Toutes ces techniques présentent l'inconvénient de n'être que provisoires (le miel recristallisera rapidement) et dégradantes d'un point de vue qualitatif. En effet, un chauffage excessif du miel (50°C ou davantage, pendant une durée non négligeable, typiquement supérieure à une heure) induit inévitablement une dégradation des enzymes et des vitamines présentes initialement, ainsi qu'une dégradation des sucres avec production d'HMF.

Deux paramètres sont en général utilisés pour mesurer la qualité d'un miel. Il s'agit du taux d'HMF et de l'indice diastasique. Un miel "frais", qui vient d'être récolté, contient en moyenne 3 mg/kg d'HMF. En absence de traitement thermique, le taux d'HMF augmente lentement et de façon variable selon les miels. Les miels acides produisent naturellement plus d'HMF que les autres, et prennent environ 10 mg/kg par an à 20°C, alors que dans les miels de miellat, par exemple, le taux d'HMF n'évoluera presque pas. Quel que soit le type de miel, un traitement par chauffage augmentera beaucoup le taux d'HMF. L'indice diastasique permet de mesurer la qualité enzymatique du miel. Il est exprimé en unités "Schade". En l'absence de chauffage excessif, il doit être supérieur à 8.

Le brevet CN 1709159 A décrit un procédé de préparation d'un miel à haute teneur en fructose pour les diabétiques.

Il existe aujourd'hui un réel besoin pour une méthode permettant d'une part, de conserver le miel sous forme liquide et limpide pendant une durée d'au moins plusieurs mois, de préférence au moins un an, et d'autre part, de ne pas dégrader qualitativement le produit.

La présente invention répond à ce besoin, puisqu'elle concerne une méthode qui confère à un miel quelconque les propriétés de limpidité et de liquidité requises pour satisfaire les consommateurs, sans nécessiter un chauffage excessif du produit. Son principe consiste à partir d'un miel comportant des cristaux de glucose (miel en cours de cristallisation ou complètement cristallisé), et d'en extraire des cristaux de glucose, afin d'atteindre, pour au moins un des trois paramètres mentionnés plus haut (F/G, D/W ou taux de glucose), une valeur compatible avec la bonne conservation du miel sous forme liquide et transparente.

La présente invention porte donc en premier lieu sur un procédé de traitement d'un miel au moins partiellement cristallisé, comportant une étape de retrait d'au moins une partie des cristaux de glucose contenus dans ledit miel, de telle façon qu'à l'issue de cette étape, le ratio entre les concentrations de fructose et de glucose dans ledit miel soit supérieur à 1,1 (F/G > 1,1), et/ou le ratio entre la concentration de glucose et la quantité d'eau dans ledit miel soit inférieur à 2,2 (D/W < 2,2), et/ou la proportion en masse du glucose dans ledit miel soit inférieure à 30%. En outre, le pourcentage d'eau dans le miel obtenu doit rester inférieur ou égal à 21%, de préférence inférieur ou égal à 20%, afin d'assurer une bonne conservation du produit.

Comme mentionné ci-dessus, un miel pour lequel au moins un de ces trois paramètres est dans la plage requise pourra être conservé plusieurs mois à température ambiante sous forme liquide et transparente, sans cristalliser. L'homme du métier choisira donc, suivant les outils dont il dispose, le paramètre qu'il jugera le plus aisé à mesurer.

Selon une mise en oeuvre particulière du procédé de l'invention, à l'issue de l'étape de retrait des cristaux de glucose, le ratio F/G est supérieur ou égal à 1,4. De préférence, une partie du glucose sera conservée, de sorte que le ratio F/G reste inférieur ou égal à 5.

De manière alternative ou additionnelle, le procédé est mis en oeuvre pour obtenir, à l'issue de l'étape de retrait des cristaux de glucose, un ratio D/W inférieur à 1,8.

De manière alternative ou additionnelle, le procédé est mis en oeuvre pour obtenir, à l'issue de l'étape de retrait des cristaux de glucose, une proportion en masse du glucose inférieure ou égale à 28%, qui restera toutefois, dans une mise en oeuvre préférée du procédé, supérieure ou égale à 10%.

Selon une mise en oeuvre particulière du procédé selon l'invention, les cristaux retirés du miel ont un diamètre moyen compris entre 1 et 100µm.

Le procédé de l'invention peut être mis en oeuvre en utilisant, pour séparer les cristaux de glucose à retirer du reste du miel, une accélération. Selon ce mode de mise en oeuvre, le procédé peut comporter les étapes ci-dessous :
(i) centrifugation du miel, dans les conditions suivantes :
   - température comprise entre 10 et 60, voire 70°C, de préférence < 50°C, de manière encore préférée ≤ 45°C
   - force centrifuge comprise entre 1000 et 30000 g
   - durée de centrifugation comprise entre quelques dixièmes de secondes et 5 heures, de préférence moins de 2 heures ; et
(ii) récupération de la phase supérieure.

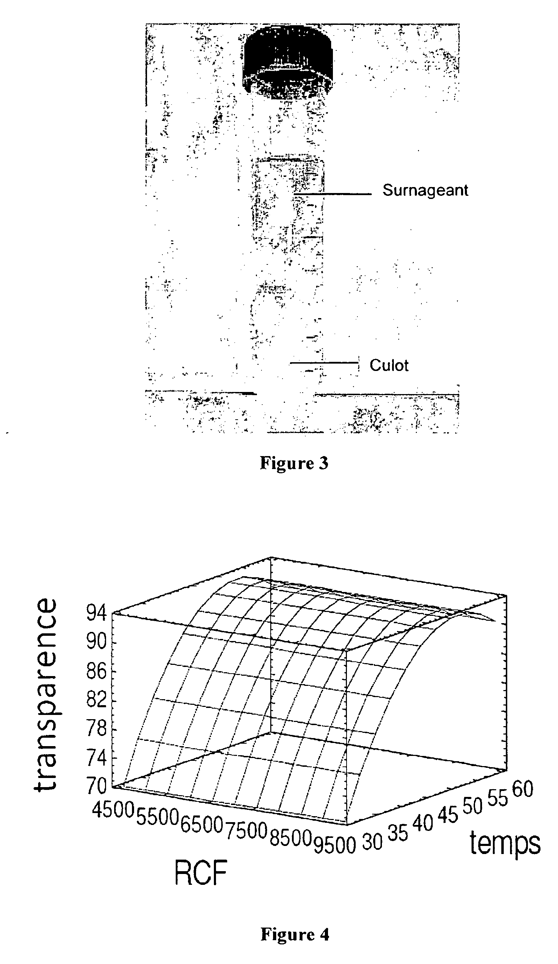

L'homme du métier adaptera la combinaison des trois paramètres (température, durée et force de centrifugation) en fonction du miel à traiter, pour obtenir une phase supérieure liquide, limpide, et comportant au plus 21% d'eau. En effet, une centrifugation trop forte est susceptible de conduire à une déshydratation de la solution de cristaux de glucose, et donc à une trop grande proportion d'eau (> 21 %) dans la fraction limpide. La figure 4 présente un exemple de surface de réponse, présentant en ordonnées le pourcentage de transparence de la phase supérieure, en fonction du couple (accélération, temps de centrifugation), pour un miel donné (miel de tournesol) et à une température donnée (35°C). L'homme du métier est à même d'obtenir, par des expériences de routine, un graphe équivalent pour n'importe quel type de miel et n'importe quelle température, ou en fixant un autre paramètre (temps ou force de centrifugation) et en faisant varier la température, *etc.,* et d'en déduire des conditions adaptées au miel qu'il doit traiter et à ses contraintes (résultat souhaité, matériel utilisé, *etc*.).

Bien entendu, la phase inférieure, comportant les cristaux de glucose extraits, peut également être récupérée. Comme décrit dans la partie expérimentale, cette phase constitue un miel particulièrement riche en glucose, qui cristallisera rapidement. Cette phase comporte la même carte pollinique que la phase supérieure limpide.

Selon un mode de réalisation particulier de l'invention, illustré dans la partie expérimentale, la centrifugation est conduite entre 30 à 40°C, à 6000 à 14000g, de préférence entre 7000 et 11000g, pendant 45 à 60 minutes.

Selon un mode de mise en oeuvre alternatif, l'étape de retrait des cristaux de glucose est effectuée par ultrafiltration. Ceci peut être effectué, par exemple, dans les conditions suivantes :
- température du miel comprise entre 30 et 48°C, de préférence ≤ 45°C
- pression entre 3 et 10 Bar
- seuil de coupure du filtre : entre 0,7 et 1,5 µm.

Il est important de noter que la température devra être soigneusement déterminée, en fonction de l'installation complète utilisée (mode continu ou en batch, vitesse de filtration, ...), pour éviter que le miel reste trop longtemps à une température élevée, afin d'éviter une dégradation des enzymes et des vitamines contenues dans le produit de départ, et l'augmentation du taux d'HMF. En outre, puisque la filtration a pour but de retenir les cristaux de glucose, il faut éviter qu'un chauffage trop important conduise à la dissolution de ces cristaux. En pratique, on évitera de maintenir le miel à une température supérieure ou égale à 45°C pendant plus d'une heure, de préférence pas plus de 30 minutes.

Selon cette mise en oeuvre de l'invention, le seuil de coupure du filtre est de préférence de l'ordre de 1 µm. Contrairement au mode décrit plus haut, où les cristaux de glucose sont extraits par centrifugation, le miel liquide obtenu par filtration sera au moins partiellement déplété en pollens. Toutefois, son contenu en vitamines et en enzymes restera inchangé. Bien évidemment, le rétentat, qui constitue un miel riche en glucose mais également enrichi en pollens, est avantageusement récupéré.

Du fait de la viscosité élevée d'un miel au moins partiellement cristallisé, l'étape de retrait des cristaux de glucose sera avantageusement précédée d'une étape de brassage du miel, associée ou non à une étape de chauffage. En effet, il est nécessaire, en particulier dans les cas où le miel est complètement figé, de le rendre plus fluide. Un brassage mécanique permet de rendre le miel apte à être pompé, en limitant le chauffage.

Le cas échéant, si le miel est initialement suffisamment fluide, l'étape de retrait des cristaux de glucose peut être précédée d'une étape de chauffage du miel sans brassage mécanique. Dans tous les cas, que le chauffage soit associé ou non à un brassage mécanique, il devra rester modéré, c'est-à -dire à une température comprise entre 30 et 60°C, de préférence < 50°C, et tel que le miel ne reste pas à une température ≥ 45°C pendant plus d'une heure, de préférence pas plus de 30 minutes sur l'ensemble du procédé.

Dans une réalisation particulière, la température du miel ne dépassera pas 45°C, voire 40°C au cours de l'ensemble du procédé de traitement (pompage et retrait des cristaux de glucose).

La présente invention porte également sur un miel susceptible d'être obtenu par un procédé tel que décrit ci-dessus. Un tel miel présente les caractéristiques suivantes :
- taux de HMF bas (≤ 10 mg/kg lors du conditionnement),
- indice diastasique élevé (> 8),
- ratio F/G > 1,1 (de préférence compris entre 1,4 et 5),
- ratio D/W < 2,2,
- pourcentage (en masse) de glucose <30%, de préférence ≤ 28%, tout en restant de préférence ≥ 10%,
- pourcentage d'eau ≤ 21%, de préférence ≤ 20%
- transparence et stabilité : le miel doit être limpide et rester limpide plusieurs moins, de préférence au moins 1 an, dans des conditions de stockage standard (20°C, obscurité),
- propriétés polliniques, physico-chimiques (sauf taux de glucose) et sensorielles caractéristiques d'un miel qui, en absence de traitement, cristalliserait en moins d'un an de stockage dans les conditions standard. L'homme du métier peut en effet, par une analyse de la carte pollinique (déterminée par mélissopalynologie), complétée par des informations physico-chimiques (couleur, conductivité électrique, acidité, *etc*.) et sensorielles, déterminer - au moins approximativement - l'origine d'un miel. Par exemple, un miel selon l'invention pourra présenter, à part le taux de glucose qui sera inférieur au taux naturel (et donc des ratio F/G et D/W modifiés), les caractéristiques d'un miel de tournesol, colza, lavande, eucalyptus, sainfoin, rhododendron, tilleul, bruyère, châtaignier, chardon, luzerne, pissenlit, romarin, thym, trèfle, arbousier, aubépine, lierre, framboisier, serpolet, citron, oranger et/ou houx, *etc.* En particulier, les pollens peuvent correspondre à ceux qui seraient retrouvés dans un miel dit "toutes fleurs" comportant de façon prépondérante des pollens d'une ou plusieurs espèces citées ci-dessus. Les miels de miellat selon l'invention présenteront également un taux de glucose inférieur au taux de glucose naturellement présent dans les miels de miellats (entre 23,5 et 26,5%), ce qui permettra leur conservation sous forme limpide pendant un an.

La présente invention sera mieux comprise à l'aide du complément de description qui va suivre, qui présente plus en détail un exemple de traitement d'un miel cristallisé, par centrifugation pour en extraire les cristaux de glucose.

### Légendes des figures

Figure 1 : Schéma du procédé de traitement (version centrifugation)
Figure 2 : A gauche, la phase lourde (absorbance non mesurable, F/G=1,1 et D/W= 2,1), et à droite la phase légère (absorbance=0,107, F/G=1,6 et D/W= 0,3).
Figure 3 : Miel de tournesol centrifugé biphasique (conditions opératoires: 35°C, 11000g, 55 min).
Figure 4: Evolution de la transparence (%) en fonction du couple temps (min) / RCF (g). La transparence est définie par rapport la valeur de transparence maximale obtenue expérimentalement (=100%). La transparence est obtenue par mesure de l'absorbance au spectromètre à 600 nm.

### Exemples

### Exemple 1 : procédé d'extraction de cristaux de glucose par centrifugation

### Principe :

Le principe porte sur la diminution de la quantité de glucose présent dans le miel (sucre qui est le plus souvent majoritaire), afin d'atteindre pour tout type de miel un ratio Fructose/Glucose compris entre 1,1 et 1,7 et/ou un ratio glucose/eau (D/W) inférieur à 2.2.

### Procédé :

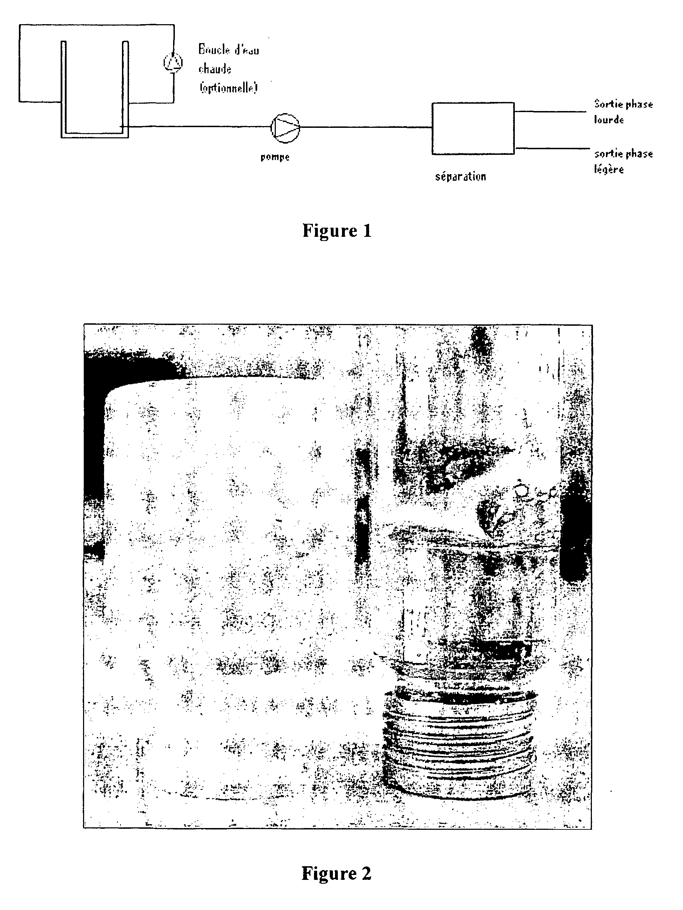

Une fois cristallisé, le miel est défigé par une technique mécanique et/ou thermique puis être centrifugé. Le procédé est schématisé à la figure 1.

La centrifugation permet d'obtenir deux phases :
- La phase la moins dense (représentant 40 à 70% en volume), dite "légère", est majoritairement composée de fructose et de glucose solubles (1,4<F/G<1,6; et/ou D/W<2,2). Cette phase possède alors un aspect proche d'un miel d'acacia et sera liquide et transparente pour une durée minimale de plusieurs mois.
- La phase la plus dense (60 à 30% en volume), dite "lourde", est composée majoritairement de cristaux de glucose. Cette phase est crémeuse, non translucide, et cristallisera.

Lors de la centrifugation, de nombreux paramètres opératoires jouent un rôle dans la séparation des cristaux de sucre. Les principaux facteurs sont :
- la nature du miel,
- la température du miel (10°C à 80°C),
- la force centrifuge (de 1000 à 30000 g) et
- le temps de séjour (de quelques dixièmes de secondes à 2 heures).

### Description détaillée du procédé

Le miel cristallisé est chauffé ou brassé suffisamment afin de pouvoir le pomper. Si le miel est chauffé, il est important de ne pas avoir un produit temps* température trop élevé, car le taux d'HMF augmenterait de façon trop importante et le miel serait dénaturé (diminution de la qualité du miel). C'est entre 30 et 60°C que le produit est le plus facilement pompable, sans pour autant avoir un fort taux d'HMF dans le produit fini. Il est aussi possible de récupérer le miel par brassage, ce qui diminue la température nécessaire et donc évite une dénaturation du produit.

Le miel entre ensuite dans la centrifugeuse pour obtenir à la sortie 2 phases : une phase légère et une phase lourde. Les proportions des deux phases sont respectivement entre 40/70% et 60/30% en volume.

La phase légère est principalement composée de sucres solubles et d'eau (1,4 ≤ F/G ≤ 1,8 et D/W < 2,2). Il est important de préciser que les autres éléments caractéristiques de l'origine du miel (pollen, enzymes, cire) sont bien conservés dans chacune des phases.

Il est extrêmement important de bien contrôler les valeurs de temps de séjour et force centrifuge exercée sur le miel. La force centrifuge est exprimée en RCF (*Relative Centrifuge Force*) ou en g. Par exemple, pour un miel à 35°C, il est nécessaire d'avoir un minimum de 7000g et un temps de séjour minimum de 55 minutes pour obtenir le résultat escompté (phase légère transparente et liquide).

Il est important de bien contrôler la vitesse de centrifugation car une trop forte force centrifuge pourrait déshydrater la solution de cristaux de glucose (phase lourde). La conséquence pourrait être une quantité d'eau dans la phase légère supérieure à la limite légale (21% pour la majorité des miels) et le développement de micro-organismes.

### Exemple 2 : séparation de cristaux de glucose d'un miel de tournesol, au laboratoire

L'expérience porte sur un miel de tournesol de moins d'un an cristallisé (cristallisation complète). Le miel est homogénéisé par brassage avant utilisation. Ce miel est pâteux et opaque. Le produit est préalablement thermostaté à 35°C au bain marie durant 15 minutes et contrôlé par un thermomètre. Une fois le miel à température, il est introduit dans une centrifugeuse de laboratoire (SIGMA laborzentrifugen 3K15). Trente grammes de produit sont introduits par tube. Après 55 minutes à 11000 g dans la centrifugeuse thermostatée à 35°C, le miel est séparé en deux phases (figure 3).

La phase légère est transparente. Cette transparence est mesurée par un spectrophotomètre à une longueur d'onde de 600nm. L'absorbance est de 0.102.

Les paramètres F/G et D/W sont respectivement pour la phase légère : 1,6 et 0,6 et pour la phase lourde: 1 et 2,2.

Le graphique de la figure 4 montre l'évolution de la transparence de la phase légère (obtenue par mesure de l'absorbance à 600 nm), en fonction du couple (temps de centrifugation / RCF), à 35°C.

## Revendications

1. Procédé de traitement d'un miel au moins partiellement cristallisé, comportant une étape de retrait d'au moins une partie des cristaux de glucose contenus dans ledit miel, de telle façon qu'à l'issue de cette étape, le miel comporte au plus 21% d'eau, le ratio entre les concentrations de fructose et de glucose soit supérieur à 1,1 (F/G > 1,1), et/ou le ratio entre la concentration de glucose et la quantité d'eau soit inférieur à 2,2 (D/W < 2,2), et/ou la proportion en masse du glucose soit inférieure à 30%.

2. Procédé selon la revendication 1, dans lequel, à l'issue de l'étape de retrait des cristaux de glucose, F/G ≥ 1,4.

3. Procédé selon la revendication 1 ou la revendication 2, dans lequel, à l'issue de l'étape de retrait des cristaux de glucose, 1,1 < F/G ≤ 5.

4. Procédé selon les revendications 1 à 3, dans lequel, à l'issue de l'étape de retrait des cristaux de g-lucose, D/W < 1,8.

5. Procédé selon les revendications 1 à 4, dans lequel, à l'issue de l'étape de retrait des cristaux de glucose, la proportion en masse du glucose est inférieure ou égale à 28%.

6. Procédé selon les revendications 1 à 5, dans lequel, à l'issue de l'étape de retrait des cristaux de glucose, la proportion en masse du glucose dans le miel est supérieure ou égale à 10%.

7. Procédé selon l'une quelconque des revendications 1 à 6, dans lequel les cristaux retirés du miel ont un diamètre moyen compris entre 1 et 100 µm.

8. Procédé selon l'une quelconque des revendications 1 à 7, dans lequel le retrait des cristaux de glucose est effectué en utilisant une accélération.

9. Procédé selon l'une quelconque des revendications 1 à 8, comportant les étapes suivantes :
(i) centrifugation du miel, dans les conditions suivantes :
- température comprise entre 10 et 60°C
- force centrifuge comprise entre 1000 et 30000 g
- durée de centrifugation comprise entre quelques dixièmes de secondes et 5 heures ;
(ii) récupération de la phase supérieure.

10. Procédé selon la revendication 9, dans lequel la température du miel est < 50°C.

11. Procédé selon la revendication 10, dans lequel la centrifugation est conduite à une température comprise entre 30 et 40°C, à une accélération entre 6000 et 14000g, pendant 45 à 60 minutes.

12. Procédé selon l'une quelconque des revendications 1 à 7, dans lequel l'étape de retrait des cristaux de glucose est effectuée par ultrafiltration, dans les conditions suivantes :
- température du miel comprise entre 30 et 48°C, de préférence ≤ 45°C
- pression comprise entre 3 et 10 Bar
- seuil de coupure du filtre compris entre 0,7 et 1,5 µm.

13. Procédé selon la revendication 12, **caractérisé en ce que** le seuil de coupure du filtre est de 1 µm.

14. Procédé selon l'une quelconque des revendications précédentes, dans lequel l'étape de retrait des cristaux de glucose est précédée d'une étape de brassage mécanique du miel.

15. Procédé selon l'une quelconque des revendications précédentes, dans lequel l'étape de retrait des cristaux de glucose est précédée d'une étape de chauffage du miel, à une température comprise entre 30 et 60°C, de préférence < 50°C.

16. Procédé selon l'une quelconque des revendications précédentes, dans lequel la température du miel reste ≤ 40°C au cours de toutes les étapes.

17. Miel susceptible d'être obtenu par un procédé selon l'une quelconque des revendications précédentes.

## Patentansprüche

1. Verfahren zur Behandlung eines wenigstens teilweise kristallisierten Honigs, umfassend einen Schritt zur Entfernung wenigstens eines Teils der in dem Honig enthaltenen Glucosekristalle, so dass der Honig nach diesem Schritt höchstens 21 % Wasser enthält, das Verhältnis zwischen Fruktose- und Glucosekonzentration größer als 1,1 ist (F/G > 1,1), und/oder das Verhältnis zwischen der Glucosekonzentration und der Wassermenge kleiner als 2,2 ist (D/W < 2,2), und/oder der Masseanteil der Glucose kleiner als 30 % ist.

2. Verfahren nach Anspruch 1, wobei, nach dem Schritt zur Entfernung der Glucosekristalle, F/G ≥ 1,4.

3. Verfahren nach Anspruch 1 oder Anspruch 2, wobei, nach dem Schritt zur Entfernung der Glucosekristalle, 1,1 < F/G ≤ 5.

4. Verfahren nach den Ansprüchen 1 bis 3, wobei, nach dem Schritt der Entfernung der Glucosekristalle, D/W < 1,8.

5. Verfahren nach den Ansprüchen 1 bis 4, wobei der Masseanteil der Glucose nach dem Schritt der Entfernung der Glucosekristalle kleiner gleich 28 % ist.

6. Verfahren nach den Ansprüchen 1 bis 5, wobei der Masseanteil der Glucose in dem Honig nach dem Schritt der Entfernung der Glucosekristalle größer gleich 10 % ist.

7. Verfahren nach einem der Ansprüche 1 bis 6, wobei die aus dem Honig entfernten Glucosekristalle einen mittleren Durchmesser zwischen 1 und 100 µm haben.

8. Verfahren nach einem der Ansprüche 1 bis 7, wobei die Entfernung der Glucosekristalle unter Anwendung von Beschleunigung erfolgt.

9. Verfahren nach einem der Ansprüche 1 bis 8, umfassend die folgenden Schritte:
(i) Zentrifugation des Honigs unter folgenden Bedingungen:
- Temperatur zwischen 10 und 60 °C,
- Zentrifugalkraft zwischen 1000 und 30000 g,
- Zentrifugationsdauer zwischen ein paar Zehntelsekunden und 5 Stunden;
(ii) Rückgewinnung der oberen Phase.

10. Verfahren nach Anspruch 9, wobei die Temperatur des Honigs < 50 °C ist.

11. Verfahren nach Anspruch 10, wobei die Zentrifugation bei einer Temperatur zwischen 30 und 40 °C über 45 bis 60 Minuten bei einer Beschleunigung zwischen 6000 und 14000 g durchgeführt wird.

12. Verfahren nach einem der Ansprüche 1 bis 7, wobei der Schritt zur Entfernung der Glucosekristalle durch Ultrafiltration unter folgenden Bedingungen erfolgt:
- Temperatur des Honigs zwischen 30 und 48 °C, vorzugsweise ≤ 45 °C,
- Druck zwischen 3 und 10 bar,
- Ausschlussgrenze des Filters zwischen 0,7 und 1,5 µm.

13. Verfahren nach Anspruch 12, **dadurch gekennzeichnet, dass** die Ausschlussgrenze des Filters 1 µm ist.

14. Verfahren nach einem der vorhergehenden Ansprüche, wobei dem Schritt zur Entfernung der Glucosekristalle ein Schritt des mechanischen Rührens des Honigs vorausgeht.

15. Verfahren nach einem der vorhergehenden Ansprüche, wobei dem Schritt zur Entfernung der Glucosekristalle ein Schritt des Erwärmens des Honigs auf eine Temperatur zwischen 30 und 60 °C, vorzugsweise < 50 °C, vorausgeht.

16. Verfahren nach einem der vorhergehenden Ansprüche, wobei die Temperatur des Honigs bei allen Schritten ≤ 40 °C bleibt.

17. Honig, erhältlich durch ein Verfahren nach einem der vorhergehenden Ansprüche.

## Claims

1. Method for treating honey that is at least partially crystallised, comprising a step of removing at least some of the glucose crystals contained in said honey so that, at the end of this step, the honey comprises not more than 21% water, the ratio between the concentrations of fructose and glucose is greater than 1,1 (F/G > 1.1), and/or the ratio between the concentration of glucose and the quantity of water is less than 2.2 (D/W < 2.2), and/or the proportion by mass of glucose is less than 30%.

2. Method according to claim 1, wherein, at the end of the step of removing the glucose crystals, F/G ≥ 1.4.

3. Method according to claims 1 or claim 2, wherein, at the end of the step of removing the glucose crystals, 1.1 < F/G ≤ 5.

4. Method according to claims 1 to 3, wherein, at the end of the step of removing the glucose crystals, D/W < 1.8.

5. Method according to claims 1 to 4, wherein, at the end of the step of removing the glucose crystals, the proportion by mass of glucose is less than or equal to 28%.

6. Method according to claims 1 to 5, wherein, at the end of the step of removing the glucose crystals, the proportion by mass of glucose in the honey is greater than or equal to 10%.

7. Method according to any one of claims 1 to 6, wherein the crystals removed from the honey have a mean diameter of from 1 to 100 µm.

8. Method according to any one of claims 1 to 7, wherein the removal of the glucose crystals is carried out using an acceleration.

9. Method according to any one of claims 1 to 8, comprising the following steps:
(i) centrifugation of the honey under the following conditions:
- temperature from 10 to 60°C,
- centrifugal force from 1000 to 30,000 g,
- centrifugation time from several tenths of a second to 5 hours;
(ii) recovery of the top phase.

10. Method according to claim 9, wherein the temperature of the honey is < 50°C.

11. Method according to claim 10, wherein the centrifugation is carried out at a temperature of from 30 to 40°C, at an acceleration of from 6000 to 14,000 g, for a period of from 45 to 60 minutes.

12. Method according to any one of claims 1 to 7, wherein the step of removing the glucose crystals is carried out by ultrafiltration under the following conditions:
- temperature of the honey from 30 to 48°C, preferably ≤ 45°C,
- pressure from 3 to 10 bar,
- cut-off of the filter from 0.7 to 1.5 µm.

13. Method according to claim 12, **characterised in that** the cut-off of the filter is 1 µm.

14. Method according to any one of the preceding claims, wherein the step of removing the glucose crystals is preceded by a step of mechanical agitation of the honey.

15. Method according to any one of the preceding claims, wherein the step of removing the glucose crystals is preceded by a step of heating the honey to a temperature of from 30 to 60°C, preferably < 50°C.

16. Method according to any one of the preceding claims, wherein the temperature of the honey remains ≤ 40°C during all the steps.

17. Honey obtainable by a method according to any one of the preceding claims.
